# EUROPÄISCHE PATENTSCHRIFT

(11) **EP 2 830 750 B1**
(45) Veröffentlichungstag und Bekanntmachung des Hinweises auf die Patenterteilung: **27.04.2016**
(21) Anmeldenummer: 13711876.6
(22) Anmeldetag: 20.03.2013
(51) Int. Cl.: B01F 7/06, F16D 1/10, B29L 31/08

(54) **HORIZONTALRÜHRWERK**
HORIZONTAL STIRRER
AGITATEUR HORIZONTAL

(30) Priorität: 30.03.2012 DE 102012205269
(43) Veröffentlichungstag der Anmeldung: 04.02.2015
(73) Patentinhaber: INVENT Umwelt- und Verfahrenstechnik AG, 91058 Erlangen (DE)
(72) Erfinder: HÖFKEN, Marcus, 91054 Erlangen (DE); HAGSPIEL, Thomas, 92353 Postbauer-Heng (DE)
(74) Vertreter: Gassner, Wolfgang
(86) Internationale Anmeldenummer: PCT/EP2013/055840
(87) Internationale Veröffentlichungsnummer: WO 2013/143946

(56) Entgegenhaltungen:
- EP-A1- 0 254 106
- EP-A1- 0 641 595
- WO-A1-2008/101632
- WO-A1-2009/039320
- WO-A2-2006/116139
- US-A- 3 865 509
- SALZMAN R N ET AL: "DYNAMIC MIXERS TURN MORE TO REINFORCED PLASTICS", CHEMICAL ENGINEERING PROGRESS, AMERICAN INSTITUTE OF CHEMICAL ENGINEERS, NEW YORK, NY, US, Bd. 87, Nr. 6, 1. Juni 1991 (1991-06-01), Seiten 39-44, XP000243534, ISSN: 0360-7275

## Beschreibung

Die Erfindung betrifft ein Horizontalrührwerk zur Erzeugung einer im Wesentlichen horizontalen Strömung in einem Abwasserbehandlungsbecken.

Aus der WO 2008/101632 A1 ist ein derartiges Horizontalrührwerk bekannt. Das bekannte Horizontalrührwerk ist an einem im Abwasserbehandlungsbecken abgestützten Pfosten angebracht. Es weist einen Tauchmotor auf. Eine davon angetriebene Welle ist mittels einer Passfederverbindung mit der Nabe eines Propellers verbunden. Bei der Passfederverbindung wird das Drehmoment der Welle im Wesentlichen über die Passfeder auf den Propeller übertragen. Dabei wirken im Bereich der Passfeder erhebliche Kräfte, welche zu einer Beschädigung der Passfederverbindung führen können. Abgesehen davon ist die Demontage des Propellers im Falle der Passfederverbindung meist schwierig und zeitaufwändig.

Die WO 2006/116139 A2 offenbart ein Vertikalrührwerk, bei dem eine Welle als Polygonwelle ausgebildet ist. Ein Propeller weist als Nabe eine zur äußeren Form der Polygonwelle korrespondierende Hülse auf. Die Hülse ist aus Metall hergestellt.

Die US 3,865,509 A offenbart einen aus einem Faserverbundwerkstoff hergestellten Schiffspropeller, dessen Nabe mit einer aus Aluminium hergestellten Hülse versehen ist.

Aufgabe der Erfindung ist es, die Nachteile nach dem Stand der Technik zu beseitigen. Es soll insbesondere ein möglichst haltbares Horizontalrührwerk zur Erzeugung einer im Wesentlichen horizontalen Strömung in einem Abwasserbehandlungsbecken angegeben werden, bei dem ein eventuell erforderlicher Austausch eines Propellers mit verringertem Aufwand möglich ist.

Diese Aufgabe wird durch die Merkmale des Anspruchs 1 gelöst. Zweckmäßige Ausgestaltungen der Erfindung ergeben sich aus den Merkmalen der Ansprüche 2 bis 8.

Nach Maßgabe der Erfindung wird ein Horizontalrührwerk zur Erzeugung einer im Wesentlichen horizontalen Strömung in einem Abwasserbehandlungsbecken vorgeschlagen, bei dem an einer mittels eines Tauchmotors angetriebenen Polygonwelle ein Propeller angebracht ist, wobei der Propeller aus einem ersten Material hergestellt ist, welches aus einem mit ersten Fasern verstärkten Kunststoff gebildet ist und wobei der Propeller als Nabe eine zur äußeren Form der Polygonwelle korrespondierende Hülse aufweist, welche aus einem vom ersten Material verschiedenen zweiten Material hergestellt ist, wobei das zweite Material aus einem mit Kohlenstoff- oder Aramidfasern verstärkten Kunststoff gebildet ist.

In Abkehr vom Stand der Technik wird erfindungsgemäß vorgeschlagen, bei einem Horizontalrührwerk zur Verbindung mit dem Propeller eine Polygonwelle zu verwenden. Eine Polygonwelle hat ein Polyprofil, welches beispielsweise drei oder vier Übertragungsflächen aufweisen kann. Bei einer Polygonwelle werden die Kräfte durch eine Flächenberührung übertragen. Dabei steigt die Flächenpressung langsam bis zu einem Maximalwert an und fällt dann wieder gleichmäßig ab. Wegen der sanften Übergänge zwischen den Übertragungsflächen ist eine Kerbwirkung zu vernachlässigen. Des Weiteren ist der Propeller aus mit ersten Fasern verstärktem Kunststoff hergestellt. Ein solcher Propeller weist ein relativ geringes Gewicht auf. - Bei dem vorgeschlagenen Horizontalrührwerk lässt sich der Propeller schnell und einfach austauschen. Die vorgeschlagene Verbindung zwischen dem Tauchmotor und dem Propeller mittels einer Polygonwelle ist besonders haltbar.

Überraschenderweise hat es sich herausgestellt, dass insbesondere eine aus mit Kohlenstofffasern verstärktem Kunststoff hergestellte Hülse eine ausreichende Festigkeit zur Aufnahme der von der Polygonwelle übertragenen Kräfte aufweist.

Vorteilhafterweise sind die zweiten Fasern Endlosfasern. In diesem Fall ist die Hülse zweckmäßigerweise durch Wickeln und Laminieren der zweiten Fasern um einen zur Form der Polygonwelle korrespondierenden Kern hergestellt. Die Herstellung einer solchen Hülse erfordert einen relativ geringen Aufwand.

Zweckmäßigerweise ist die Hülse mit dem ersten Material verklebt. Wegen der vorgeschlagenen Herstellung der Hülse aus einem mit zweiten Fasern verstärktem Kunststoff ist es möglich, mit dem zur Herstellung des Propellers verwendeten Kunststoff in herkömmlicher Weise eine stoffschlüssige Verbindung zu schaffen. Eine solche stoffschlüssige Verbindung zeichnet sich durch eine hervorragende Festigkeit aus.

Nach einer weiteren vorteilhaften Ausgestaltung der Erfindung sind die ersten Fasern Glasfasern. Glasfasern sind relativ preisgünstig verfügbar. Die Glasfasern liegen zweckmäßigerweise in Form von Geweben oder Gewirken vor. Damit kann der Propeller insgesamt relativ preisgünstig hergestellt werden.

Nach einer weiteren besonders vorteilhaften Ausgestaltung der Erfindung ist eine Oberfläche des Propellers zumindest abschnittsweise mit einer aus einem dritten Material hergestellten Schicht beschichtet. Das dritte Material ist vorteilhafterweise aus mit zweiten Kohlenstofffasern verstärktem Kunststoff gebildet. Das dritte Material wird vorteilhafterweise insbesondere in denjenigen Abschnitten der Oberfläche aufgebracht, welche besonders hohen Kräften, insbesondere Abriebskräften oder dgl., ausgesetzt sind. Die Schicht kann aber insbesondere auch die gesamte äußere Oberfläche des Propellers umgeben.

Die zweiten Kohlenstofffasern liegen vorteilhafterweise in Form eines Gewebes, Gewirks oder von Kurzfasern vor. Das ermöglicht eine relativ einfache Herstellung einer relativ dünnen Schicht aus dem dritten Material.

Nach einer alternativen Ausgestaltung kann das zweite Material auch aus Stahl, vorzugsweise aus Edelstahl, hergestellt sein.

Nachfolgend werden Ausführungsbeispiele der Erfindung anhand der Zeichnungen näher erläutert. Es zeigen:
- Fig. 1: eine perspektivische Ansicht eines Horizontalrührwerks,
- Fig. 2: eine perspektivische Ansicht der Polygonwelle sowie eines aufgeschnittene Ansicht des Propellers und
- Fig. 3: eine teilweise aufgebrochene perspektivische Ansicht des Propellers.

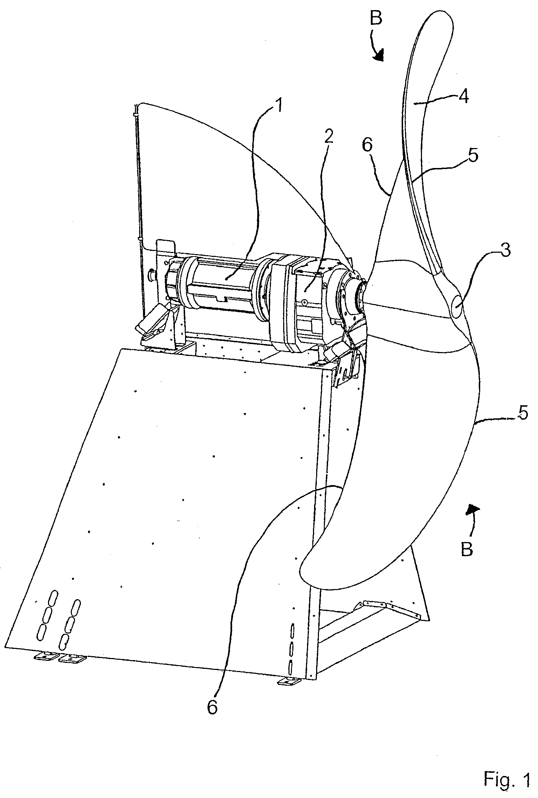

Bei dem in Fig. 1 gezeigten Horizontalrührwerk ist ein Tauchmotor 1 antriebsmäßig mit einem Getriebe 2 verbunden. Vom Getriebe 2 erstreckt sich eine Polygonwelle 3 (hier nicht im Detail gezeigt), an der ein Propeller 4 angebracht ist. Der Propeller 4 weist zwei Blätter B mit Anström- 5 und Abströmkanten 6 auf.

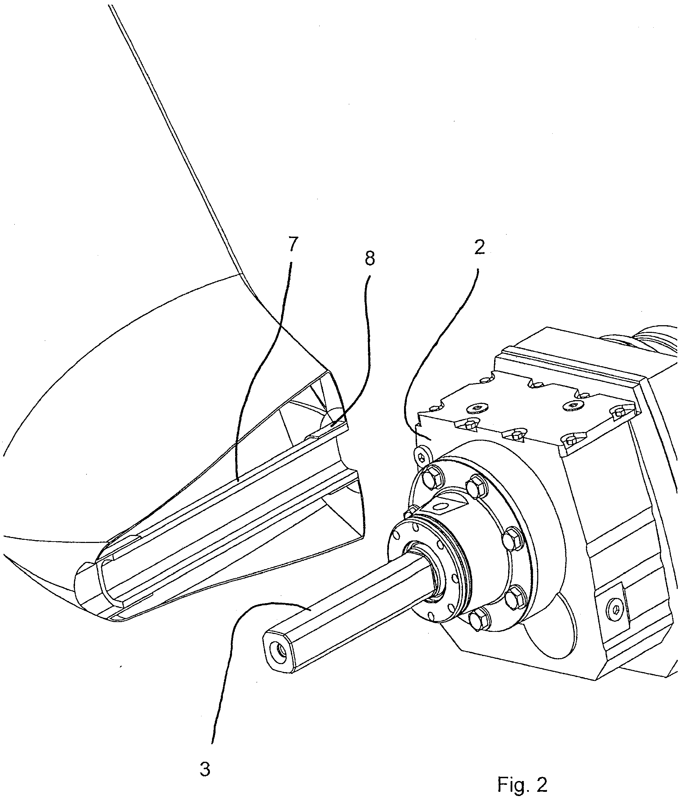

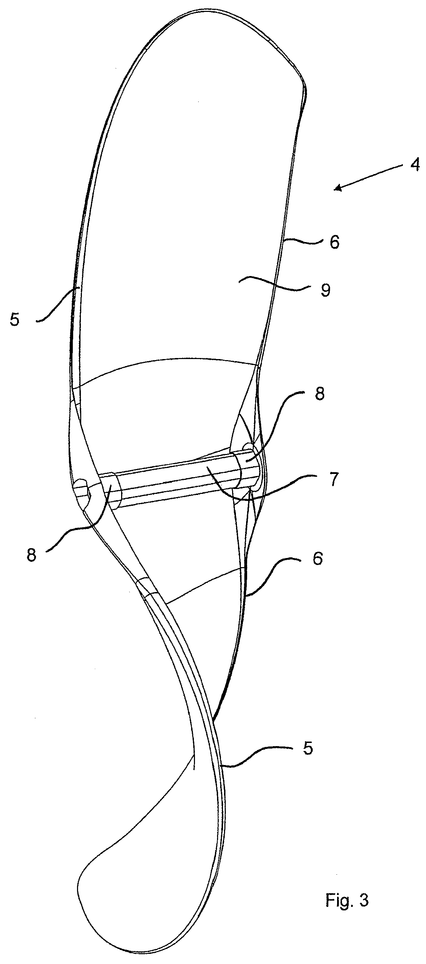

Wie insbesondere aus den Fig. 2 und 3 ersichtlich ist, ist der Propeller 4 aus einem Hohlkörper gebildet, welcher beispielsweise aus mit Glasfasern verstärktem Kunststoff hergestellt sein kann. Eine Nabe des Propellers 4 umfasst eine Hülse 7, deren Innenumfang zum Außenumfang der Polygonwelle 3 korrespondiert. Die Polygonwelle 3 weist vorteilhafterweise vier Übertragungsflächen auf. Es kann sich um ein P4C-Profil handeln. - Die Hülse 7 ist zweckmäßigerweise aus einem mit Kohlenstofffasern verstärkten Kunststoff hergestellt. Als Kohlenstofffasern kommen hier vorteilhafterweise Endlosfasern zum Einsatz. Die Hülse 7 ist über zwei flanschartige Endstücke 8 an eine Innenseite des Hohlkörpers angebunden. Die Endstücke 8 sind zweckmäßigerweise aus mit Glas- oder Kohlenstofffaser verstärktem Kunststoff hergestellt. Die Anbindung der Hülse 7 an die Endstücke 8 erfolgt z. B. mittels Verkleben.

Der den Propeller 4 bildende Hohlkörper ist vorteilhafterweise aus zwei Halbschalen gebildet. Fig. 3 zeigt eine der beiden Halbschalen 9. Eine Fügelinie der beiden Halbschalen 9 verläuft etwa entlang der Anström- 5 sowie der Abströmkanten 6 des Propellers 4.

Zur Herstellung des Propellers 4 kann zunächst beispielsweise die in Fig. 3 gezeigte eine Halbschale 9 hergestellt und anschließend die Hülse 7 darin eingesetzt und mit den an der ersten Halbschale 9 angeformten Endstücken 8 verklebt werden. Sodann kann eine zweite Halbschale (hier nicht gezeigt) entlang etwa der Anström- 5 und der Abströmkanten 6 mit der ersten Halbschale 9 verklebt werden. Der so hergestellte Hohlkörper wird anschließend zweckmäßigerweise mit einem Kunststoffschaum, beispielsweise Polyurethanschaum oder dgl., ausgeschäumt.

Nach einer Ausgestaltung kann eine Außenseite des Propellers 4 mit einer mit Kohlenstofffasern verstärkten Kunststoffschicht versehen sein. Eine solche Außen- oder Hüllschicht trägt weiter zur Erhöhung der Festigkeit des Propellers 4 bei.

### Bezugszeichenliste

- 1: Tauchmotor
- 2: Getriebe
- 3: Polygonwelle
- 4: Propeller
- 5: Anströmkante
- 6: Abströmkante
- 7: Hülse
- 8: Endstück
- 9: Halbschale

- B: Blatt

## Patentansprüche

1. Horizontalrührwerk zur Erzeugung einer im Wesentlichen horizontalen Strömung in einem Abwasserbehandlungsbecken,
bei dem an einer mittels eines Tauchmotors (1) angetriebenen Polygonwelle (3) ein Propeller (4) angebracht ist,
wobei der Propeller (4) aus einem ersten Material hergestellt ist, welches aus einem mit ersten Fasern verstärkten Kunststoff gebildet ist und wobei der Propeller (4) als Nabe eine zur äußeren Form der Polygonwelle (3) korrespondierende Hülse (7) aufweist, welche aus einem vom ersten Material verschiedenen zweiten Material hergestellt ist, wobei das zweite Material aus einem mit Kohlenstoff- oder Aramidfasern verstärkten Kunststoff gebildet ist.

2. Horizontalrührwerk nach Anspruch 1, wobei die zweiten Fasern Endlosfasern sind.

3. Horizontalrührwerk nach einem der vorhergehenden Ansprüche, wobei die Hülse (7) durch Wickeln und Laminieren der zweiten Fasern um einen zur Form der Polygonwelle (3) korrespondierenden Kern hergestellt ist.

4. Horizontalrührwerk nach einem der vorhergehenden Ansprüche, wobei die Hülse (7) mit dem ersten Material verklebt ist.

5. Horizontalrührwerk nach einem der vorhergehenden Ansprüche, wobei die ersten Fasern Glasfasern sind.

6. Horizontalrührwerk nach einem der vorhergehenden Ansprüche, wobei eine Oberfläche des Propellers (4) zumindest abschnittsweise mit einer aus einem dritten Material hergestellten Schicht beschichtet ist.

7. Horizontalrührwerk nach Anspruch 6, wobei das dritte Material aus mit zweiten Kohlenstofffasern verstärktem Kunststoff gebildet ist.

8. Horizontalrührwerk nach Anspruch 7, wobei die zweiten Kohlenstofffasern in Form eines Gewebes, Gewirks oder von Kurzfasern vorliegen.

## Claims

1. A horizontal agitator for producing a substantially horizontal flow in a wastewater treatment tank,
a propeller (4) being installed on a polygonal shaft (3) driven by means of a submersible motor (1),
wherein the propeller (4) is produced from a first material, which is formed from a polymer reinforced with first fibres, and wherein the propeller (4) as hub has a sleeve (7) which corresponds to the outer shape of the polygonal shaft (3) and which is produced from a second material which is different from the first material, wherein the second material is formed from a polymer reinforced with carbon fibres or aramid fibres.

2. The horizontal agitator according to Claim 1, wherein the second fibres are continuous fibres.

3. The horizontal agitator according to one of the preceding claims, wherein the sleeve (7) is produced by winding and laminating the second fibres around a core corresponding to the shape of the polygonal shaft (3).

4. The horizontal agitator according to one of the preceding claims, wherein the sleeve (7) is adhesively bonded to the first material.

5. The horizontal agitator according to one of the preceding claims, wherein the first fibres are glass fibres.

6. The horizontal agitator according to one of the preceding claims, wherein a surface of the propeller (4) is coated at least in portions with a layer produced from a third material.

7. The horizontal agitator according to Claim 6, wherein the third material is formed from polymer reinforced with second carbon fibres.

8. The horizontal agitator according to Claim 7, wherein the second carbon fibres are present in the form of a woven fabric, knitted fabric or short fibres.

## Revendications

1. Agitateur horizontal pour générer un courant pratiquement horizontal dans un bassin de traitement d'eaux usées,
sur lequel une hélice (4) est montée sur un arbre polygonal (3) entraîné par un moteur immergé (1),
en ce que l'hélice (4) est fabriquée à partir d' un premier matériau qui est constitué d'une première matière plastique renforcée par des fibres et en ce que l'hélice (4) présente en tant que moyeu une enveloppe (7) correspondant à la forme extérieure de l'arbre polygonal (3) et fabriquée à partir d' un deuxième matériau différent du premier matériau, en ce que le deuxième matériau est constitué d'une matière plastique renforcée par des fibres de carbone ou d'aramide.

2. Agitateur horizontal selon la revendication 1, en ce que les deuxièmes fibres sont des fibres continues.

3. Agitateur horizontal selon l'une des revendications précédentes, en ce que l'enveloppe (7) est réalisée par enroulement et laminage des deuxièmes fibres autour d'un noyau correspondant à la forme de l'arbre polygonal (3).

4. Agitateur horizontal selon l'une des revendications précédentes, en ce que l'enveloppe (7) est collée avec le premier matériau.

5. Agitateur horizontal selon l'une des revendications précédentes, en ce que les premières fibres sont des fibres de verre.

6. Agitateur horizontal selon l'une des revendications précédentes, en ce qu'une surface de l'hélice (4) est au moins partiellement recouverte d'une couche réalisée à partir d'un troisième matériau.

7. Agitateur horizontal selon la revendication 6, en ce que le troisième matériau est réalisé à partir d'une matière plastique renforcée par des deuxièmes fibres de carbone.

8. Agitateur horizontal selon la revendication 7, en ce que les deuxièmes fibres de carbone sont sous forme de tissu, de mailles ou de fibres courtes.
